# EUROPÄISCHE PATENTSCHRIFT

(11) **EP 4 411 275 B1**
(45) Veröffentlichungstag und Bekanntmachung des Hinweises auf die Patenterteilung: **12.02.2025**
(21) Anmeldenummer: 24152280.4
(22) Anmeldetag: 17.01.2024
(51) Int. Cl.: F24S 25/613, F24S 25/632, F24S 25/70, F24S 25/60

(54) **DACHHAKEN**
ROOF HOOK
CROCHET DE TOIT

(30) Priorität: 31.01.2023 DE 202023100435 U
(43) Veröffentlichungstag der Anmeldung: 07.08.2024
(73) Patentinhaber: OBO Bettermann Hungary Kft., 2347 Bugyi (HU)
(72) Erfinder: BODAI, Robert, 1149 Budapest (HU)
(74) Vertreter: Haverkamp Patentanwälte PartG mbB

(56) Entgegenhaltungen:
- EP-A1- 3 315 874
- EP-A1- 4 075 077
- DE-A1- 102018 122 176
- DE-A1- 102020 116 376
- DE-U1- 202009 001 025
- US-A1- 2015 060 619

## Beschreibung

Gegenstand der Erfindung ist ein Dachhaken zum Befestigen eines Paneels, insbesondere eines Photovoltaik-Moduls oder eines Solarpaneels oder einer Komponente dafür auf einer Dachkonstruktion, umfassend
- einen an der Dachkonstruktion befestigbaren Montagefuß,
- einen Träger zum Anbringen einer Komponente zum Anschließen des Paneels und
- einen zum Umgreifen einer Dachschindel ausgelegten, hakenförmigen Tragarm, der mit einem Endabschnitt als Tragarmanschlussabschnitt an den Montagefuß anschließbar und durch den mit seinem anderen Endabschnitt der Träger bereitgestellt ist.

Derartige Dachhaken werden bei Schrägdächern zur Montage von auf der Dachaußenseite zu montierenden Paneelen, etwa von Photovoltaik-Modulen oder Solarpaneelen eingesetzt. Teil eines solchen Dachhakens ist ein an der Dachkonstruktion befestigbarer Montagefuß. Dieser verfügt typischerweise über eine Durchbrechungen aufweisende Grundplatte, so dass diese an der unterhalb der Dachschindeln befindlichen Dachkonstruktion befestigbar ist. Ein solcher Montagefuß kann, wenn dieser eine gewisse Längserstreckung aufweist, auch durch eine Montageschiene bereitgestellt sein bzw. als solcher angesprochen werden. Ein solcher Dachhaken verfügt des Weiteren über einen hakenförmigen Tragarm. Dieser hat an seinem einen Ende einen Tragarmanschlussabschnitt, mit dem dieser an den Montagefuß angeschlossen werden kann. Der hakenförmige Tragarm ist dem Dachgefälle folgend unter einer Dachschindel herausgeführt und hat an seinem dann oberhalb der Dachschindel befindlichen Ende einen Träger. Dieser Träger dient zum Anschließen von Komponenten zum Anschließen eines Paneels. Hierbei kann es sich um Schrauben, Montageschienenadapter und dergleichen handeln, je nachdem, wie ein Paneel oder eine diese tragende Komponente montiert werden soll.

Für eine bestimmungsgemäße Montage eines Paneels ist es erforderlich, dass sich die Träger von in einer Reihe angeordneten Dachhaken in derselben Höhe und möglichst miteinander fluchtend befinden. Da Dachkonstruktionen typischerweise diesbezügliche Unregelmäßigkeiten aufweisen, ist eine Abstandseinrichtung zwischen dem Tragarm und der Grundplatte dem Montagefuß vorgesehen. Hierfür ist der Tragarmanschlussabschnitt hinsichtlich seiner Befestigung an der Montageschiene höheneinrichtbar. Die diesbezügliche Höheneinrichtung bzw. Abstandseinrichtung des Trägers befindet sich in der Einbauposition unterhalb einer Dachschindel. Gemäß einem vorbekannten Dachhaken erfolgt dieses durch eine entsprechende Verschraubung.

Eine Rastverbindung zum Anschließen des Tragarmanschlussabschnittes eines Tragarms eines Dachhakens an seinen Montagefuß ist aus DE 10 2018 122 176 A1 bekannt. Bei diesem Dachhaken ist der Montagefuß durch eine Montageschiene als stranggepresste Schiene bereitgestellt. Zwei in Längserstreckung der Montageschiene verlaufende Schenkel begrenzen einen Montagekanal als Montageraum. An der jeweils gleichen Seite der Schenkel sind Verklammerungsstrukturen vorgesehen, in die der Fuß als Tragarmanschlussabschnitt mit den Verklammerungsstrukturen in Eingriff gestellt werden kann. Zur Verriegelung dient ein Spannhebel, der mittels eines Schiebers zu sichern ist. Um eine bestimmungsgemäße Befestigung dieses Tragarms an der Montageschiene zu gewährleisten, müssen die Verklammerungsstrukturen desjenigen Schenkels, an dem der Spannhebel nicht abgestützt ist, in Spannrichtung hinterschnitten sein. Der Tragarmanschlussabschnitt verfügt daher über einen Brückenabschnitt, mit dem dieser die Montageschiene überbrückt, damit er mit einer Eingreifstruktur in eine solchermaßen ausgelegten Hinterschnitt (Struktur) eingreifen kann. Da bei diesem vorbekannten Dachhaken mehrere Verklammerungsstrukturen übereinander vorgesehen sind, kann sein Träger hinsichtlich seines Abstandes zur Grundplatte der Montageschiene entsprechend eingerichtet werden. Eine stufenlose Einrichtung ist aufgrund der vorgegebenen Verklammerungsstrukturen jedoch nicht möglich.

Bei diesem vorbekannten Dachhaken ist an das Ende des hakenförmigen Abschnittes seines Tragarms ein sich in Hochrichtung erstreckender Schenkel angeformt. Angeschlossen an diesen ist ein gegenüber diesem höheneinrichtbarer Träger für eine Paneelmontageschiene. Die Fixierung der Höheneinrichtung erfolgt werkzeuglos mittels einer Hülse, die nach Einrichten der Höhe auf eine Klemmvorrichtung aufgeschoben wird. An ihren zueinander weisenden Seiten weist dieser Abschnitt des Tragarms mit dem höheneinrichtbaren Träger komplementäre Verklammerungsstrukturen auf, durch die die Höheneinrichtung zusätzlich formschlüssig gesichert ist.

Der Stellhebel des Spannelementes befindet sich unterhalb des Brückenabschnittes des Trägerarmanschlussabschnittes. Dieser ist daher nur seitlich zugänglich, was die Zugänglichkeit für eine Betätigung des Spannhebels beeinträchtigt. Überdies wäre es wünschenswert, wenn als Montageschienen auch kostengünstigere als stranggepresste Schienen eingesetzt werden könnten, beispielsweise solche aus insbesondere verzinktem Stahlblech. Auch sollte der Dachhaken mit weiteren Freiheitsgraden hinsichtlich einer Einrichtung seines Trägers an die örtlichen Gegebenheiten ausgelegt werden können.

EP 4 075 077 A1, DE 10 2020 116376 A1 und US 2015/060619 A1 beschreiben Dahchaken gemäß dem Oberbegriff des Anspruchs 1.

Ausgehend von diesem diskutierten Stand der Technik liegt der Erfindung die Aufgabe zugrunde, einen Dachhaken vorzuschlagen, der den vorstehend genannten Anforderungen genügt.

Gelöst wird diese Aufgabe erfindungsgemäß zum Einen durch einen eingangs genannten, gattungsgemäßen Dachhaken, bei dem
- der Montagefuß eine Grundplatte und zwei daran angeschlossene, einen Montageraum seitlich begrenzende, einander gegenüberliegende Schenkel aufweist, die an ihrer zu dem jeweils anderen Schenkel weisenden Seite eine beispielsweise schienenartige Stützstruktur tragen,
- zwei gegeneinander verstellbare Spreizelemente als Anschlussmittel zum Anschließen des Tragarmes an den Montagefuß vorgesehen sind, von denen jeweils eines an jeder Stützstruktur des Montagefußes in Richtung zum Montageraum hin abgestützt ist und die Spreizelemente jeweils über einen Spannabschnitt verfügen sowie
- ein Spannmittel, welches mit den Spreizelementen zum Ausüben einer Vorspannung auf die Abstützanordnung zwischen den Spreizelementen und der jeweiligen Stützstruktur in Eingriff gestellt ist,
- wobei in der Spannstellung der Spreizelemente der Tragarmanschlussabschnitt zwischen den Spannabschnitten der Spreizelemente gehalten ist.

Gelöst wird diese Aufgabe ferner durch einen eingangs genannten, gattungsgemäßen Dachhaken, bei dem der Tragarm zweiteilig ausgeführt ist und sein Tragarmanschlussabschnitt Teil eines ersten Tragarmteils und sein Träger Teil eines zweiten Tragarmteils ist, welche beiden Tragarmteile in Bezug auf den Abstand des Trägers von der Grundplatte des Montagefußes zueinander außerhalb der den Montagefuß bedeckenden Dachschindel einrichtbar sind.

Gemäß dem ersten Lösungsvorschlag ist der Tragarm mit seinem Tragarmanschlussabschnitt unter Verwendung von zwei Spreizelementen, die durch ein Spannmittel gegeneinander spreizbar sind, an dem Montagefuß befestigbar. Ein Spreizen erfolgt durch die Verstellung der beiden Spreizelemente gegeneinander. Jedes Spreizelement kann auch als Klemmteil angesprochen werden. Die Spreizelemente dienen als Anschlussmittel zum Anschlie-βen des Tragarmes mittels seines Tragarmanschlussabschnittes an den Montagefuß. Gemäß einer bevorzugten Ausgestaltung ist der Montagefuß als Montageschiene realisiert, weist mithin die Möglichkeit auf, dass der Tragarm mit seinem Tragarmanschlussabschnitt darin in Längserstreckung der Montageschiene an unterschiedlichen Positionen verspannt werden kann. Als Spannmittel kann beispielsweise ein Spannbolzen dienen. Jedes Spreizelement verfügt über einen beispielsweise als Spannplatte ausgelegten Spannabschnitt und über Mittel zum Abstützen desselben an einer Stützstruktur des Montagefußes. Dabei befindet sich der Tragarmanschlussabschnitt in einer Sandwichposition zwischen den Spannabschnitten der beiden Spreizelemente. Da die Spreizelemente an der Stützstruktur des Montagefußes abgestützt sind, die derjenigen Seite des Tragarmanschlussabschnittes des Tragarms, zu dem der jeweilige Spannabschnitt weist, gegenüberliegt, erfolgt die Spreizung der beiden Spreizelemente durch Spannen des Spannmittels, durch das die beiden Spannabschnitte aufeinander zubewegt werden, jedoch aufgrund der vorbeschriebenen Ineingriffstellung des Spannmittels mit den Spreizelementen die Mittel zum Abstützen der Spreizelemente an den einander gegenüberliegenden Stützstrukturen des Montagefußes voneinander weg bewegt werden. Das Betätigungsende des Spannmittels ist bei diesem Dachhaken ohne Weiteres zugänglich und wird insbesondere nicht durch andere bei vorbekannten Dachhaken notwendige Strukturen überdeckt. Eine solche Spreizbefestigung ist auch vorteilhaft hinsichtlich einer Handhabung des Dachhakens und seiner Einrichtbarkeit in Längserstreckung eines als Montageschiene eingesetzten Montagefußes. Insofern können die beiden Spreizelemente gegenüber der Montageschiene vorgespannt werden, so dass ein Verschieben des Tragarms in der Montageschiene zum Einrichten seiner Position ohne Weiteres möglich ist, bevor das Spannmittel zum Fixieren der eingerichteten Stellung des Tragarms gespannt wird.

Als Stützstrukturen des Montagefußes, die von den seitlichen Schenkeln zu dem jeweils anderen Schenkel des Montagefußes abragen, können beispielsweise Stützschienen vorgesehen sein, etwa bereitgestellt durch eine endseitige Abkantung jedes Schenkels. Bei einer solchen Ausgestaltung ist es zweckmäßig, wenn die Spreizelemente zum Abstützen an einer solchen Stützschiene jeweils eine Stützschienenaufnahme aufweisen, so dass die Spreizelemente in Hochrichtung des Dachhakens formschlüssig an den Montagefuß angeschlossen sind. Dann dienen die Stützschienen zugleich als Führungsschienen für die bereits vorbeschriebene axiale Verstellbarkeit des Tragarms gegenüber eines als Montageschiene ausgelegten Montagefußes. Zugleich ist hierdurch eine Lastaufnahme verbessert.

Die zueinander weisenden Stirnflächen derartiger Stützschienen können genoppt oder mit einer in Reihe angeordneten Ausnehmungen nach Art von Rastausnehmungen ausgeführt sein, damit in dieser Richtung bei verspanntem Tragarm ein Formschluss zwischen einem Spreizelement und der entsprechenden Stützschiene herbeigeführt ist.

Der Montagefuß kann beispielsweise als C-Profilabschnitt ausgeführt sein. Es versteht sich, dass eine solche Querschnittsgeometrie auch solche Auslegungen umfasst, bei denen die beiden den Montageraum einfassenden Schenkel ungleich ausgebildet sind, solange an den zueinander weisenden Seiten einander gegenüberliegende Stützstrukturen vorgesehen sind.

Zweckmäßig ist eine Ausgestaltung des Montagefußes, bei der der eine Schenkel höher ist als der andere und somit die beispielsweise als Stützschiene ausgeführte Stützstruktur des einen Schenkels einen größeren Abstand zur Grundplatte des Montagefußes aufweist als der andere. Dieses schafft zusätzlichen Raum, um Zugang zu einem beispielsweise durch einen Schraubendreher zu betätigenden Spannmittel, etwa einem Spannbolzen, zu haben.

Die Spreizelemente sind typischerweise Stanz-Biegeteile. Als Stanzbiegeteile werden im Rahmen dieser Ausführungen auch solche Ausgestaltungen klassifiziert, bei denen der Ausschnitt der Platinenkontur nicht notwendigerweise durch Stanzen, sondern beispielsweise durch Lasern oder anderweitige Methoden erfolgt ist. Bei einer solchen Auslegung der Spreizelemente sind die Spannabschnitte durch jeweils eine Spannplatte bereitgestellt. An ihrer Spannplatte sind an einander gegenüberliegenden Seiten und winklig zu dieser in dieselbe Richtung abragende Stützschenkel angeformt. Diese stützen sich mit ihrem Ende an einer Stützstruktur des Montagefußes ab. Handelt es sich bei dieser um eine Stützschiene mit in ihre Stirnfläche eingebrachten Verklammerungsstrukturen, ist der Abstand dieser Strukturen in Längserstreckung des Montagefußes vorzugsweise so ausgeführt, dass zwischen zwei positiven Strukturen jeweils ein Stützschenkel des Spreizelementes eingreift, wenn der Tragarm mit der Montageschiene verspannt ist. Vorteilhaft bei einer solchen Auslegung mit der Beabstandung der beiden Schenkel in Richtung der Längserstreckung des Montageraums ist auch die damit erstellte Zwei-Punkt-Abstützung, so dass die Befestigung des Tragarms an dem Montagefuß vor allem auch in Bezug auf darauf einwirkenden höheren Quer- oder Torsionskräften standhält. Typischerweise sind die Stützschenkel der beiden Spreizelemente jeweils an derselben Seite in Bezug auf den Tragarmanschlussabschnitt in einer gemeinsamen Ebene und in Hochrichtung versetzt zueinander angeordnet. Die Spannplatten der beiden Spreizelemente befinden sich in Bezug auf ihre Spannöffnung zum Durchführen des Spannmittels in derselben Höhe. Zugleich ist bei einer solchen Ausgestaltung der Spreizelemente durch jedes Spreizelement eine zu dem Tragarmanschlussabschnitt des Tragarmes hin offene Aufnahme bereitgestellt. Typischerweise sind die Stützschenkel voneinander soweit beabstandet, dass der Tragarmanschlussabschnitt darin mit nur geringem Spiel einpasst. Dann ist der Tragarm durch die Spreizelemente auch in einer Vorfixierstellung gegenüber einem Verkippen gesichert.

Die von den Schenkeln der Montageschiene an ihren zueinander weisenden Seiten befindlichen Stützstrukturen, beispielsweise Stützschienen, befinden sich gemäß einer bevorzugten Ausgestaltung in einer Ebene. Die Spreizkraft wird dann in den Montagefuß in dieser Ebene in die Stützstrukturen und damit in die Schenkel eingeleitet. Dieses unterstützt einen besonders sicheren Halt des an dem Montagefuß verspannten Tragarms.

Die vorbeschriebene Konzeption dieses Dachhakens erlaubt in einfacher Weise die Bereitstellung einer Höheneinrichtung des Tragarms gegenüber dem Montagefuß. Hierzu dient gemäß einem bevorzugten Ausführungsbeispiel ein in diese Richtung verlaufendes Langloch dem zwischen den beiden Spannplatten der Spreizelemente befindlichen Tragarmanschlussabschnitt. Bei einer solchen Ausgestaltung kann vorgesehen sein, dass die von dem Trägerarmanschlussabschnitt zu den beiden Spreizelementen weisende Oberfläche mit einer in Querrichtung zur Einstellrichtung verlaufenden Verklammerungsstrukturierung, beispielsweise einer Rillierung, und die zu der jeweiligen Seite des Trägerarmanschlussabschnittes weisenden Seite der beiden Spreizelemente eine komplementäre Verklammerungsstrukturierung tragen. Eine Einrichtung des Tragarms gegenüber dem Montagefuß kann dann mit einem einzigen Spannmittel erfolgen, typischerweise einer Spannschraube, mit der beide Freiheitsgrade fixiert werden.

Die Spannkraft, mit der der Tragarm des erfindungsgemäßen Dachhakens mit dem Montagefuß, beispielsweise als Montageschiene ausgeführt, wird in die einander gegenüberliegenden, den Montageraum seitlich begrenzenden Schenkel als Spannwiderlager eingeleitet. Somit kann in diese Schenkel eine Vorspannung eingekoppelt werden, durch die die Spannverbindung zusätzlich gesichert wird.

In der verspannten Stellung ist der Tragarmanschlussabschnitt des Tragarmes zwischen den beiden Spannabschnitten fixiert. In Bezug auf eine Höheneinrichtung des Tragarmanschlussabschnittes zur Grundplatte des Montagefußes an den Spannabschnitten der Spreizelemente können die in der Spannstellung einander kontaktierenden Flächen jeweils komplementäre Verklammerungsstrukturen, beispielsweise in Querrichtung zur Einrichtbarkeit verlaufende Rillierungen vorgesehen sein.

Gemäß dem zweiten Lösungsvorschlag, der durchaus mit dem ersten Lösungsvorschlag kombiniert werden kann und gemäß einer bevorzugten Ausgestaltung auch kombiniert ist, ist der Tragarm zweiteilig ausgeführt, und zwar dergestalt, dass der Tragarmteil mit dem Tragarmanschlussabschnitt ein erster Tragarmteil und der den Träger tragende Tragarmteil ein zweiter Tragarmteil ist. Die beiden Tragarmteile sind in Bezug auf den Abstand des Trägers von der Grundplatte des Montagefußes einrichtbar. Eine solche Höheneinrichtung des Trägers erfolgt somit innerhalb des Tragarms, jedoch außerhalb der auf die Dachkonstruktion aufgelegten Dachschindel. Dieses bedeutet, dass der obere Abschluss des Tragarms unabhängig von der Einrichtung des Abstandes seines Trägers zur Grundplatte des Montagefußes jeweils unverändert ist. An den Träger können daher Befestigungsmittel angeschlossen werden, die durchaus in beliebiger Richtung über den Träger überstehen können. Gemäß einem Ausführungsbeispiel ist diese Abstandseinrichtung so realisiert, dass einer der beiden zusammenwirkenden Tragarmabschnitte der Tragarmteile jeweils ein sich in Richtung der Abstandseinrichtung erstreckendes Langloch und der andere Tragarmabschnitt eine Innengewindebohrung oder einen Innengewindedurchzug für eine Spannschraube aufweist. Zweckmäßig ist, wenn die zueinander weisenden Flächen dieser Tragarmabschnitte zusätzlich Verklammerungsstrukturen tragen, die bei verspannten Tragarmabschnitten miteinander in Eingriff gestellt sind. Bei derartigen Verklammerungsstrukturen kann es sich beispielsweise um quer zur Richtung der Abstandseinrichtung verlaufende Rillierungen handeln. Die diesbezügliche Einrichtbarkeit der beiden Tragarmteile kann über geeignete Mittel geführt sein, beispielsweise dadurch, dass einer der beiden miteinander zusammenwirkenden Tragarmabschnitte seitliche, den anderen Tragarmabschnitt seitlich einfassende Führungswangen aufweist.

Der Träger des Tragarmes kann dem Zweck dienen, dass darauf unmittelbar ein Paneel befestigt wird. In gleicher Weise kann der Träger den Befestigungsgrund für beliebige andere Komponenten eines Photovoltaik-Modulsystems oder eines Solarpaneelsystems, etwa für einen Montageschienenadapter oder für einen Montagefuß bereitstellen. Der Träger selbst kann Mittel aufweisen, damit eine daran anzuschließende Komponente, wie beispielsweise ein Adapter oder dergleichen in Längserstreckung dieses Abschnittes des Tragarms einrichtbar ist. Typischerweise verläuft der Träger parallel zu der Erstreckung des Tragarmes. Zur Einrichtbarkeit einer an den Träger anzuschließenden Komponente kann beispielsweise eine langlochartige Durchbrechung vorgesehen sein. Wird als Befestigungsmittel beispielsweise eine Schraube eingesetzt, kann die auf dem Träger zu befestigende Komponente auch um die Achse der Schraube durch Drehen eingerichtet werden, bevor die Schraube verspannt wird.

Bei dem erfindungsgemäßen Dachhaken gemäß dem ersten Lösungsvorschlag können an ein und demselben Montagefuß, und zwar insbesondere in einer Auslegung als Montageschiene, mehrere Tragarme in der beschriebenen Weise angeschlossen werden. Gemäß dem zweiten Lösungsvorschlag kann der Montagefuß auch integraler Bestandteil mit dem Tragarm sein.

Nachfolgend ist die Erfindung anhand eines Ausführungsbeispiels unter Bezugnahme auf die beigefügten Figuren beschrieben. Es zeigen:
**Fig. 1****:** einen erfindungsgemäßen Dachhaken nach Art einer Explosionsdarstellung,
**Fig. 2****:** der Dachhaken der Figur 1 in seinem Zusammenbau,
**Fig. 3****:** eine perspektivische vergrößerte Darstellung der Verspannung des Tragarms mit der Montageschiene und
**Fig. 4****:** der Dachhaken, angeschlossen an eine Dachkonstruktion.

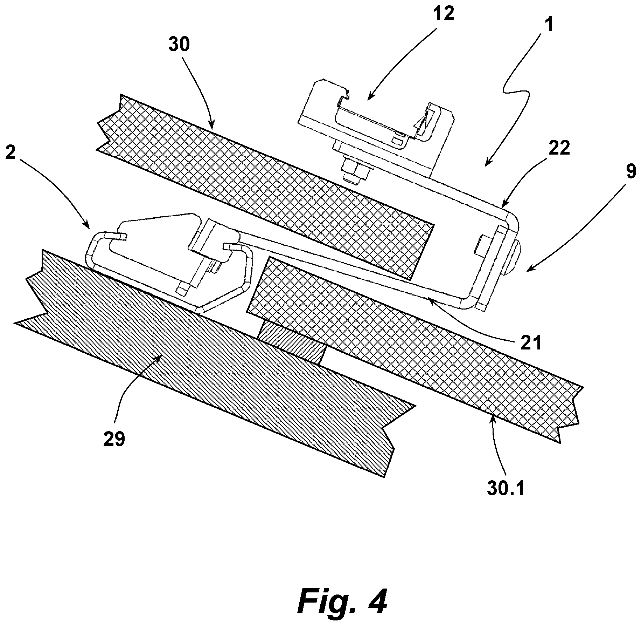

Ein Dachhaken 1 umfasst eine Montageschiene 2 als Montagefuß, über die der Dachhaken 1 an einer Dachkonstruktion befestigbar ist. Die Montageschiene 2 verfügt über eine Grundplatte 3, in die in einem vorgegebenen Raster Befestigungsöffnungen 4 zum Verschrauben der Montageschiene 2 an einer Dachkonstruktion mittels beispielsweise Schrauben befestigbar ist. Die Montageschiene 2 umfasst zwei Schenkel 5, 5.1, die die Grundplatte 3 seitlich in Längserstreckung der Montageschiene 2 begrenzen. Die Schenkel, 5, 5.1 sind gegenüber der Grundplatte 3, und zwar ausgehend von der Grundplatte 3 in dieselbe Richtung abgewinkelt. Jeder Schenkel 5, 5.1 trägt an seinem Ende eine zu dem jeweils anderen Schenkel 5.1 bzw. 5 gerichtete und von dem Schenkel 5 bzw. 5.1 abragende Stützstruktur, die bei dem dargestellten Ausführungsbeispiel als Stützschiene 6, 6.1 ausgeführt ist. Die flächige Erstreckung der Stützschienen 6, 6.1 befinden sich in einer Ebene (siehe auch Figur 4). Die Ebene, in der sich die flächige Erstreckung der Stützschienen 6, 6.1 befindet, ist gegenüber der Ebene der Grundplatte 3 geneigt. Erreicht wird dieses bei dem dargestellten Ausführungsbeispiel dadurch, dass der Schenkel 5.1 mit seinem oberen, die Stützschiene 6.1 tragenden Abschluss einen größeren Abstand zur Grundplatte 3 aufweist als der Schenkel 5. Der Schenkel 5.1 des dargestellten Ausführungsbeispiels ist zudem in sich V-förmig ausgelegt, wobei ein erster Schenkelabschnitt 7 mit der Grundplatte 3 einen stumpfen Winkel, bei dem dargestellten Ausführungsbeispiel (etwa 120°) einschließt. Der zweite Schenkelabschnitt 7.1 schließt mit dem ersten Schenkelabschnitt 7 etwa den gleichen Winkel ein. Die zueinander weisenden Stirnkanten 8, 8.1 der Stützschienen 6, 6.1 sind mit in Richtung der Längserstreckung der Montageschiene 2 wirkenden Verklammerungsstrukturen ausgerüstet. Die Verklammerungsstrukturen des dargestellten Ausführungsbeispiels sind nach Art von Rastvertiefungen konzipiert. Die Montageschiene 2 ist ein Stanzbiegeteil aus einem verzinkten Stahlblech.

Dem Dachhaken zugehörig ist ferner ein Tragarm 9. Dieser stellt das eigentliche Hakenelement des Dachhakens 1 bereit. Der Tragarm 9 verfügt über ein an der Montageschiene 2 befestigbaren Tragarmanschlussabschnitt 10 an seinem einen Ende. Durch das andere Ende desselben ist ein Träger 11 bereitgestellt. Der Träger 11 des Tragarmes 9 dient zum Anschließen von Befestigungsmitteln für den Anschluss etwa eines Photovoltaik-Moduls oder Solarpaneels. Bei diesen Befestigungsmitteln kann es sich um solche handeln, die zur unmittelbaren Befestigung eines Paneels dienen oder auch um solche, an denen wiederum Befestigungsmittel zum Verspannen eines Paneels angeschlossen werden. Bei dem dargestellten Ausführungsbeispiel ist an den Träger 11 des Tragarms 9 ein Montageschienenadapter 12 angeschlossen.

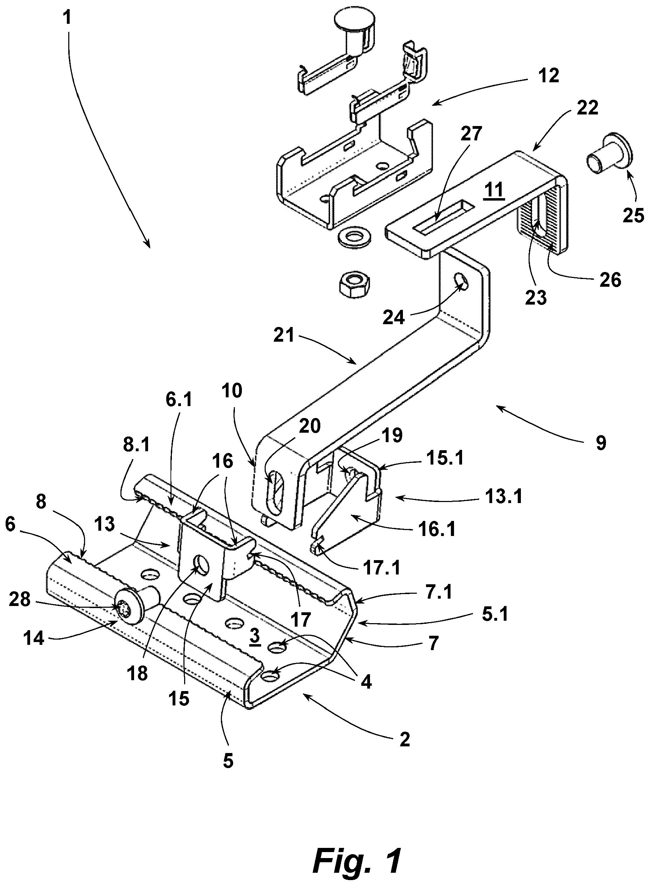

Die Befestigung des Tragarmes 9 mit seinem Tragarmanschlussabschnitt 10 an der Montageschiene 2 erfolgt über zwei ebenfalls als Stanzbiegeteile ausgeführte Spreizelemente 13, 13.1 und ein bei dem dargestellten Ausführungsbeispiel als Spannschraube 14 vorgesehenes Spannmittel. Die Spreizelemente 13, 13.1 dienen somit als Anschlussmittel zum Anschließen des Tragarmes 9 an die Montageschiene 2. Die Spreizelemente 13, 13.1 verfügen jeweils über eine Spannplatte 15, 15.1 als Spannabschnitte und daran an gegenüberliegenden Seiten angeformte, bei dem dargestellten Ausführungsbeispiel abgekantete Stützschenkel 16, 16.1. Die Breite der Spannplatten 15, 15.1 in Längserstreckung der Montageschiene 2 ist bei beiden Spreizelementen 13, 13.1 gleich. Daher ist der Abstand der jeweils beiden Schenkel 16 bzw. 16.1 voneinander bei beiden Spreizelementen 13, 13.1 gleich. Durch die jeweilige Spannplatte 15, 15.1 und die daran angeformten Stützschenkel 16, 16.1 ist eine jeweils Aufnahme für den Tragarmanschlussabschnitt 10 bereitgestellt. Zum Befestigen des Tragarms 9 an einer Montageschiene 2 werden die beiden Spreizelemente 13, 13.1 in eine Anordnung gebracht, in der die jeweiligen Spannplatten 15, 15.1 zu einer Seite des Tragarmanschlussabschnittes 10 weisen und die jeweiligen Stützschenkel 16, 16.1 in derselben Richtung an dem Tragarmanschlussabschnitt 10 vorbeigeführt und zum Abstützen an der bezüglich des Tragarmanschlussabschnittes 10 gegenüberliegenden Stützschiene 6 bzw. 6.1 vorgesehen sind. Aus diesem Grunde sind die Stützschenkel 16, 16.1 in der in Figur 1 gezeigten Hochrichtung versetzt zueinander angeordnet. **In** die voneinander wegweisenden freien Enden der Stützschenkel 16, 16.1 sind Stützschienenaufnahmen 17, 17.1 eingebracht. In diese greift die jeweilige Stützschiene 6, 6.1 der Montageschiene 2 zum Verspannen des Tragarms 9 an der Montageschiene 2 mit einem Randabschnitt ein. Die an den Stirnkanten 8, 8.1 der Stützschiene 6, 6.1 eingebrachten Rastvertiefungen weisen einen Abstand voneinander auf, der dem Abstand der Stützschenkelaufnahmen 17, 17.1 der jeweils beiden Stützschenkel 16, 16.1 entspricht. Die Spannplatte 15 des Spreizelementes 13 verfügt über eine Durchbrechung 18 zum Durchführen des Gewindeschaftes der Spannschraube 14. Die Spannplatte 15 des anderen Spreizelementes 13.1 trägt an komplementärer Stelle einen Innengewindedurchzug 19.

Für die Befestigung des Tragarmes 9 an der Montageschiene 2 wird der Tragarmanschlussabschnitt 10, wie in Figur 1 gezeigt, in die durch die Spreizelemente 16, 16.1 bereitgestellten Aufnahmen eingebracht und die Spannschraube durch die Durchbrechung 18 durch und ein sich in Hochrichtung erstreckendes Langloch 20 des Tragarmanschlussabschnittes 10 hindurchgeführt und in den Innengewindedurchzug 19 des Spreizelementes 13.1 eingefädelt. In einer solchen Vormontagestellung kann der Tragarm 9 mit den daran mittels der Spannschraube 14 angeschlossenen Spreizelementen 13, 13.1 ohne weiters von oben zwischen die zueinander weisenden Stirnkanten 8, 8.1 der Stützschiene 6, 6.1 der Montageschiene eingesetzt werden. Durch das sich in Hochrichtung erstreckende Langloch innerhalb des Tragarmanschlussabschnittes 10 kann der Abstand des Tragarmanschlussabschnittes 10 von der Grundplatte 3 bzw. von der Montageschiene 2 eingerichtet werden. Mithin dient diese Einrichtung zum Anpassen der Höhe des Tragarmes 9 an die Gegebenheiten vor Ort.

Der Tragarm 9 des dargestellten Ausführungsbeispiels ist zweiteilig aufgebaut und umfasst ein erstes Tragarmteil 21 und ein zweites Tragarmteil 22. Die Schnittstelle zwischen den beiden Tragarmteilen 21, 22 befindet sich in dem Umlenkabschnitt des die Hakenform bestimmenden Tragarms 9, mithin in demjenigen Abschnitt des Tragarms 9, in dem der Abstand des Trägers 11 gegenüber der Montageschiene 2 eingerichtet werden kann. Dieses ist bei dem Dachhaken 1 möglich. Zu diesem Zweck weist das zweite Tragarmteil 22 mit seinem Träger 11 ein sich in Abstandsänderungsrichtung erstreckendes Langloch 23 auf. Der komplementäre Schenkel 24 des ersten Tragarmteils 21 ist mit einer Innengewindebohrung 24 ausgerüstet. Eine Spannschraube 25 dient zur Verbindung der beiden Tragarmteile 21, 22.

Die zueinander weisenden Seiten der für die Abstandseinrichtung zusammenwirkenden Schenkel der Tragarmteile 21, 22 sind mit einer quer zur Richtung der Abstandsänderung verlaufenden Rillierung 26 (zu erkennen an dem zweiten Tragarmteil 22) ausgerüstet. Diese Rillierungen 26 sind zur Bereitstellung eines zusätzlichen Formschlusses nach Einrichten des Abstandes des Trägers 11 von der Montageschiene 2 im durch die Spannschraube 25 verspannten Zustand miteinander in Eingriff gestellt.

In den Träger 11 des Tragarms 9 ist bei dem dargestellten Ausführungsbeispiel eine langlochartige Montagedurchbrechung 27 eingebracht. Diese erstreckt sich in Querrichtung zu der Längserstreckung der Montageschiene 2. Aufgrund der Auslegung der Montagedurchbrechung 27 kann somit ein Befestigungsmittel in dieser Richtung hinsichtlich seiner Positionierung eingerichtet werden. Dieses gilt bei dem dargestellten Ausführungsbeispiel für den Montageschienenadapter 12. Der Montageschienenadapter 12 dient zum Anschließen einer Montageschiene, auf deren Oberseite ein Paneel, beispielsweise ein Photovoltaik-Modul aufliegt und mittels an der Montageschiene festgelegten Befestigungsklemmen gehalten werden kann.

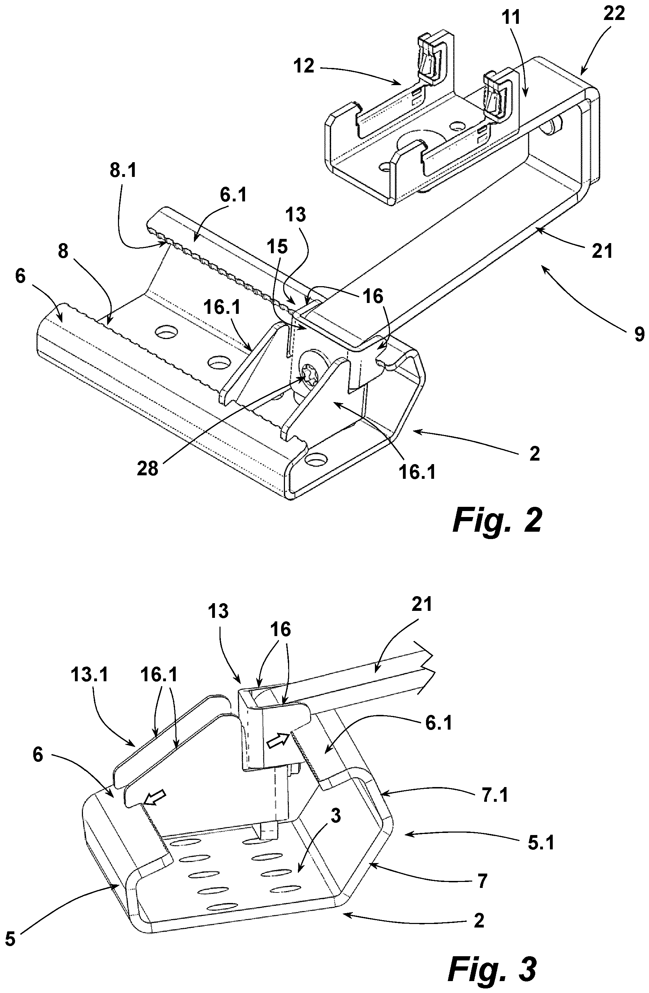

Nachdem in der Vorspannstellung der Tragarm 9 mit seinem Tragarmanschlussabschnitt 10 und den daran angeschlossenen Spreizelementen 13, 13.1 zwischen die zueinander weisenden Stirnkanten 8, 8.1 der Montageschiene 2 eingesetzt ist, wird die Spannschraube 14 so weit gespannt, dass die Stirnkanten 8, 8.1 lose in die Stützschienenaufnahmen 17, 17.1 eingeführt sind. Damit ist der Tragarm 9 bereits an die Montageschiene 2 angeschlossen, kann jedoch noch in Längserstreckung derselben und zum Einrichten der Positionierung des Tragarmes gegenüber der Montageschiene verschoben werden. Gleichfalls ist in dieser Stellung die Höhe des Tragarms 9 und somit die Beabstandung seines Tragarmanschlussabschnittes 10 von der Grundplatte 3 der Montageschiene 2 einrichtbar. Ist der Tragarm 9 bezüglich dieser beiden Freiheitsgrade eingerichtet, wird diese Position durch Spannen der Spannschraube 14 fixiert. Dabei wirken die Schenkel 16, 16.1 der Spreizelemente 13, 13.1 in entgegengesetzte Richtungen, wie dieses in Figur 3 anhand der Blockpfeile schematisiert gezeigt ist. Die Spreizelemente 13, 13.1 werden somit gegenüber den in einer Ebene befindlichen Stützschienen 16, 16.1 verspannt. Dass sich diese in einer Ebene befinden, ist für die Krafteinleitung in die Montageschiene 2 günstig. Die Auslegung des Schenkels 5.1, dessen Stützschiene 6.1 einen größeren Abstand zur Grundplatte 3 der Montageschiene 2 aufweist als die Stützschiene 6 gewährleistet eine ungehinderte Zugänglichkeit zu der Drehmitnahmekontur 28 der Spannschraube 14. Ein entsprechendes Schraubwerkzeug kann ohne weiteres, die Stützschiene 6 übergreifend, in die Drehmitnahmekontur 28 eingesetzt werden. Zugleich bewirkt die längere Ausführung des Schenkels 5.1 durch seine vorbeschriebene Auslegung mit den beiden Schenkelabschnitten 7, 7.1, dass dieser Schenkel 5.1 bei Anlegen einer entsprechenden Spannkraft über die Spannschraube 14 in geringem Maße elastisch deformiert wird, was die Befestigungsverbindung zwischen dem Tragarm 9 und der Montageschiene 2 zusätzlich sichert.

Figur 4 zeigt eine Einbausituation des Dachhakens 1 an einen Balken 29 einer im Übrigen nicht näher dargestellten Dachkonstruktion. Die Montageschiene 2 ist an dem Balken 29 in nicht näher dargestellter Weise durch Schrauben befestigt. Der Tragarm 9 ist unter in Figur 4 gezeigten Dachschindel 30 und oberhalb der darunter befindlichen Dachschindel 30.1 mit seinem ersten Tragarmteil 21 herausgeführt. Damit befindet sich die Schnittstelle zwischen den beiden Tragarmteilen 21, 22 außerhalb der Dachschindeln 30, 30.1. Dieses erlaubt eine Höheneinrichtbarkeit des Trägers 11 hinsichtlich seines Abstandes zu der Montageschiene 2 bzw. auch zu der Dachschindel 30 auch bei mit den Dachschindel 30, 30.1 belegten Dachkonstruktion.

Die Beschreibung in der Erfindung verdeutlicht, dass bei diesem Dachhakten 1 nicht nur die Montage seines Tragarms 9 mit der Montageschiene 2 vereinfacht ist, sondern dass dieser Dachhaken 1 auch etliche Freiheitsgrade hinsichtlich seiner Einrichtung zur Anpassung an die jeweiligen Erfordernisse aufweist.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung umzusetzen, ohne dass dieses im Rahmen dieser Ausführungen im Einzelnen näher dargelegt werden müsste.

### Bezugszeichenliste

- 1: Dachhaken
- 2: Montagefuß/Montageschiene
- 3: Grundplatte
- 4: Befestigungsöffnung
- 5, 5.1: Schenkel
- 6, 6.1: Stützschiene
- 7, 7.1: Schenkelabschnitt
- 8, 8.1: Stirnkante
- 9: Tragarm
- 10: Tragarmanschlussabschnitt
- 11: Träger
- 12: Montageschienenadapter
- 13, 13.1: Spreizelement
- 14: Spannschraube
- 15, 15.1: Spannabschnitt/Spannplatte
- 16, 16.1: Stützschenkel
- 17, 17.1: Stützschienenaufnahme
- 18: Durchbrechung
- 19: Innengewindedurchzug
- 20: Langloch
- 21: erster Tragarmteil
- 22: zweiter Tragarmteil
- 23: Langloch
- 24: Innengewindebohrung
- 25: Spannschraube
- 26: Rillierung
- 27: Montagedurchbrechung
- 28: Drehmitnahmekontur
- 29: Balken
- 30, 30.1: Dachschindel

## Patentansprüche

1. Dachhaken zum Befestigen eines Paneels, insbesondere eines Photovoltaik-Moduls oder eines Solarpaneels oder eine Komponente dafür auf einer Dachkonstruktion, umfassend
- einen an der Dachkonstruktion befestigbaren Montagefuß (2),
- einen Träger (11) zum Anbringen einer Komponente (12) zum Anschließen des Paneels und
- einen zum Umgreifen einer Dachschindel ausgelegten, hakenförmigen Tragarm (9), der mit einem Endabschnitt als Tragarmanschlussabschnitt (10) an den Montagefuß (2) anschließbar und durch den mit seinem anderen Endabschnitt der Träger (11) bereitgestellt ist, wobei
- der Montagefuß (2) eine Grundplatte (3) und zwei daran angeschlossene, einen Montageraum seitlich begrenzende, einander gegenüberliegende Schenkel (5, 5.1) aufweist, die an ihrer zu dem jeweils anderen Schenkel (5, 5.1) weisenden Seite eine beispielsweise schienenartige Stützstruktur (6, 6.1) tragen, **dadurch gekennzeichnet, dass**
- zwei gegeneinander verstellbare Spreizelemente (13, 13.1) als Anschlussmittel zum Anschließen des Tragarmes (9) an den Montagefuß (2) vorgesehen sind, von denen jeweils eines an jeder Stützstruktur (6, 6.1) des Montagefußes (2) in Richtung zum Montageraum hin abgestützt ist und die Spreizelemente (13, 13.1) jeweils über einen Spannabschnitt (15, 15.1) verfügen sowie
- ein Spannmittel (14), welches mit den Spreizelementen (13, 13.1) zum Ausüben einer Vorspannung auf die Abstützanordnung zwischen den Spreizelementen (13, 13.1) und der jeweiligen Stützstruktur (6, 6.1) in Eingriff gestellt ist,
- wobei in der Spannstellung der Spreizelemente (13, 13.1) der Tragarmanschlussabschnitt (10) zwischen den Spannabschnitten (15, 15.1) der Spreizelemente (13, 13.1) gehalten ist.

2. Dachhaken nach Anspruch 1, **dadurch gekennzeichnet, dass** die Spreizelemente (13, 13.1) über zwei an ihren Spannabschnitt (15, 15.1) an einander gegenüberliegenden Seiten und winklig zu diesem in derselben Richtung abragende angeformte Stützschenkel (16, 16.1) zum Abstützen an einer Stützstruktur (6, 6.1) der Montageschiene (2) aufweisen und durch die Stützschenkel (16, 16.1) zusammen mit dem diesen verbindenden Spannabschnitt (15, 15.1) eine Aufnahme für den Tragarmanschlussabschnitt (10) bereitgestellt ist.

3. Dachhaken nach Anspruch 2, **dadurch gekennzeichnet dass** jeweils ein Stützschenkel (16) des einen Spreizelementes (13) mit dem an derselben Seite befindlichen Stützschenkel (16.1) des anderen Spreizelementes (13.1) in einer Ebene in Bezug auf ihren Abstand zur Grundplatte (3) des Montagefußes (2) versetzt zueinander an ihren jeweiligen Spannabschnitt (15, 15.1) angeformt sind.

4. Dachhaken nach einem der Ansprüche 2 bis 3, **dadurch gekennzeichnet, dass** die Stützschenkel (16, 16.1) der Spreizelemente (13, 13.1) endseitig eine Stützstrukturaufnahme (17, 17.1) aufweisen.

5. Dachhaken nach einem der Ansprüche 1 bis 4, **dadurch gekennzeichnet, dass** die Stützstrukturen (6, 6.1) des Montagefußes (2) in ihrer Erstreckung in Richtung der Längserstreckung des Montagefußes (2) in einer Ebene verlaufen.

6. Dachhaken nach einem der Ansprüche 1 bis 5, **dadurch gekennzeichnet, dass** die einander bezüglich des Montageraumes gegenüberliegenden Stützstrukturen (6, 6.1) einen unterschiedlichen Abstand zur Grundplatte (3) des Montagefußes (2) haben.

7. Dachhaken nach einem der Ansprüche 1 bis 6, **dadurch gekennzeichnet, dass** die Stützstrukturen der Montageschiene (2) als Stützschienen (6, 6.1) ausgeführt sind.

8. Dachhaken nach Anspruch 7, **dadurch gekennzeichnet, dass** die zu der jeweils anderen Stützstruktur (6, 6.1) weisende Stirnkante (8, 8.1) in Längserstreckung des Montagefußes (2) wirkende Verklammerungsstrukturen, etwa Rastvertiefungen, aufweist.

9. Dachhaken nach einem der Ansprüche 1 bis 8, **dadurch gekennzeichnet, dass** der Montagefuß eine Montageschiene (2) ist.

10. Dachhaken nach einem der Ansprüche 1 bis 9, **dadurch gekennzeichnet, dass** der Abstand des Trägerarmanschlussabschnittes (10) zur Grundplatte (3) des Montagefußes (2) einrichtbar zur Abstandseinrichtung in den Trägerarmanschlussabschnitt (10) ein sich in Richtung der Abstandseinrichtung erstreckendes, von dem Spannmittel (14) durchgriffenes Langloch (20) eingebracht ist.

11. Dachhaken gemäß dem Oberbegriff des Anspruchs 1 oder gemäß einem der Ansprüche 1 bis 10, **dadurch gekennzeichnet, dass** der Tragarm (9) zweiteilig ausgeführt ist und sein Tragarmanschlussabschnitt (10) Teil eines ersten Tragarmteils (21) und sein Träger (11) Teil eines zweiten Tragarmteils (22) ist, welche beiden Tragarmteile (21, 22) in Bezug auf den Abstand des Trägers (11) von der Grundplatte (3) des Montagefußes (2) zueinander außerhalb der den Montagefuß (2) bedeckenden Dachschindel (30) einrichtbar sind.

12. Dachhaken nach Anspruch 11, **dadurch gekennzeichnet, dass** von den zur Abstandseinrichtung zusammenwirkenden Tragarmabschnitten einer ein sich in Abstandsänderungsrichtung erstreckendes Langloch (23) und der andere eine Innengewindebohrung (24) für eine Spannschraube (25) zum Verspannen der beiden Tragarmabschnitte (21, 22) miteinander aufweist.

13. Dachhaken nach Anspruch 11 oder 12, **dadurch gekennzeichnet, dass** die zueinander weisenden Flächen der für die Abstandseinrichtung vorgesehenen Tragarmabschnitte jeweils komplementäre Verklammerungsstrukturen (26) tragen, die bei miteinander verspannten Tragarmabschnitten (21, 22) miteinander in Eingriff gestellt sind.

14. Dachhaken nach einem der Ansprüche 11 bis 12, **dadurch gekennzeichnet, dass** die beiden Tragarmteile in Richtung ihrer Einrichtbarkeit aneinander geführt sind.

15. Dachhaken nach einem der Ansprüche 1 bis 14, **dadurch gekennzeichnet, dass** an den Träger (11) des Tragarms (9) ein Montageschienenadapter (12) angeschlossen ist.

## Claims

1. A roof hook for fastening a panel, in particular a photovoltaic module or a solar panel or a component therefor on a roof structure, comprising
- a mounting base (2) fastenable on the roof structure,
- a support (11) for attaching a component (12) for connecting the panel, and
- a hook-shaped support arm (9) designed to engage around a roof shingle, which is connectable to the mounting base (2) with one end section as a support arm connecting section (10) and by which the support (11) is provided with its other end section, wherein
- the mounting base (2) has a base plate (3) and two legs (5, 5.1) which are connected thereto and laterally delimit an mounting space and are opposite to one another and which, on their side facing towards the respective other leg (5, 5.1), carry a supporting structure (6, 6.1), for example in the form of a rail, **characterized in that**
- two mutually adjustable expansion elements (13, 13.1) are provided as connecting means for connecting the support arm (9) to the mounting base (2), one of which is supported on each supporting structure (6, 6.1) of the mounting base (2) in the direction toward the mounting space and the expansion elements (13, 13.1) each have a clamping section (15, 15.1), and
- a clamping means (14) which is engaged with the expansion elements (13, 13.1) to exert a preload on the supporting arrangement between the expansion elements (13, 13.1) and the respective supporting structure (6, 6.1),
- wherein in the clamping position of the expansion elements (13, 13.1), the support arm connecting section (10) is held between the clamping sections (15, 15.1) of the expansion elements (13, 13.1).

2. The roof hook according to claim 1, **characterized in that** the expansion elements (13, 13.1) have two integrally formed supporting legs (16, 16.1), projecting at their clamping section (15, 15.1) on opposite sides and at an angle thereto in the same direction, for supporting on a supporting structure (6, 6.1) of the mounting rail (2), and a receptacle for the supporting arm connecting section (10) is provided by the supporting legs (16, 16.1) together with the clamping section (15, 15.1) connecting the latter.

3. The roof hook according to claim 2, **characterized in that** in each case one supporting leg (16) of the one expansion element (13) is formed on its respective clamping section (15, 15.1) in a plane offset relative to its distance from the base plate (3) of the mounting base (2) with the supporting leg (16.1) of the other expansion element (13.1) located on the same side.

4. The roof hook according to one of claims 2 to 3, **characterized in that** the supporting legs (16, 16.1) of the expansion elements (13, 13.1) have a supporting structure receptacle (17, 17.1) at their ends.

5. The roof hook according to any one of claims 1 to 4, **characterized in that** the supporting structures (6, 6.1) of the mounting base (2) extend in one plane in their extension in the direction of the longitudinal extension of the mounting base (2).

6. The roof hook according to any one of claims 1 to 5, **characterized in that** the supporting structures (6, 6.1) lying opposite to one another with respect to the mounting space are at a different distance from the base plate (3) of the mounting base (2).

7. The roof hook according to any one of claims 1 to 6, **characterized in that** the supporting structures of the mounting rail (2) are designed as supporting rails (6, 6.1).

8. The roof hook according to claim 7, **characterized in that** the end edge (8, 8.1) facing towards the respective other supporting structure (6, 6.1) has clamping structures, such as detent depressions, which act in the longitudinal extension of the mounting base (2).

9. The roof hook according to any one of claims 1 to 8, **characterized in that** the mounting base is a mounting rail (2).

10. The roof hook according to any one of claims 1 to 9, **characterized in that** the distance of the support arm connecting section (10) from the base plate (3) of the mounting base (2), which can be configured for the spacing device, is introduced into the support arm connecting section (10) by an elongated hole (20) which extends in the direction of the spacing device and through which the clamping means (14) passes.

11. The roof hook according to the preamble of claim 1 or according to any one of claims 1 to 10, **characterized in that** the support arm (9) is embodied in two parts and its support arm connecting section (10) is part of a first support arm part (21) and its support (11) is part of a second support arm part (22), which two support arm parts (21, 22) can be configured outside the roof shingle (30) covering the mounting base (2) with respect to the distance of the support (11) from the base plate (3) of the mounting base (2) to one another.

12. The roof hook according to claim 11, **characterized in that** of the support arm portions cooperating with the spacing device, one has an elongated hole (23) extending in the spacing change direction and the other has an internally threaded bore (24) for a clamping screw (25) for clamping the two support arm sections (21, 22) together.

13. The roof hook according to claim 11 or 12, **characterized in that** the mutually facing surfaces of the support arm sections provided for the spacing device each carry complementary clamping structures (26) which are engaged with one another when the support arm sections (21, 22) are clamped together.

14. The roof hook according to any one of claims 11 to 12, **characterized in that** the two support arm parts are guided against one another in the direction of their adjustability.

15. The roof hook according to any one of claims 1 to 14, **characterized in that** a mounting rail adapter (12) is connected to the support (11) of the support arm (9).

## Revendications

1. Crochet de toit destiné à la fixation d'un panneau, en particulier d'un module photovoltaïque ou d'un panneau solaire, ou composant de celui-ci sur une structure de toit, comprenant
- un pied de montage (2) pouvant être fixé à la structure de toit,
- un support (11) pour le montage d'un composant (12) pour le raccordement du panneau, et
- un bras de support (9) en forme de crochet, conçu pour entourer un bardeau de toit, qui peut être raccordé au pied de montage (2) par une section d'extrémité en tant que section de raccordement de bras de support (10) et par lequel le support (11) est mis à disposition par son autre section d'extrémité, dans lequel,
- le pied de montage (2) présente une plaque de base (3) et deux branches (5, 5.1) qui y sont raccordées et qui délimitent latéralement un espace de montage et se font face, et qui portent sur leur côté tourné vers l'autre branche (5, 5.1) une structure d'appui (6, 6.1), par exemple en forme de rail, **caractérisé en ce que**
- deux éléments d'écartement (13, 13.1) réglables l'un par rapport à l'autre sont prévus comme moyens de raccordement pour le raccordement du bras de support (9) au pied de montage (2), dont l'un s'appuie sur chaque structure d'appui (6, 6.1) du pied de montage (2) en direction de l'espace de montage et les éléments d'écartement (13, 13.1) possèdent chacun une section de serrage (15, 15.1) et
- un moyen de serrage (14) qui est mis en prise avec les éléments d'écartement (13, 13.1) pour exercer une précontrainte sur l'ensemble d'appui entre les éléments d'écartement (13, 13.1) et la structure d'appui (6, 6.1) respective,
- dans lequel dans la position de serrage des éléments d'écartement (13, 13.1), la section de raccordement de bras de support (10) est maintenue entre les sections de serrage (15, 15.1) des éléments d'écartement (13, 13.1).

2. Crochet de toit selon la revendication 1, **caractérisé en ce que** les éléments d'écartement (13, 13.1) présentent deux branches d'appui (16, 16.1) formées sur leur section de serrage (15, 15.1) sur des côtés opposés et faisant saillie angulairement par rapport à celle-ci dans la même direction, pour l'appui sur une structure d'appui (6, 6.1) du rail de montage (2) et un logement pour la section de raccordement de bras de support (10) est mis à disposition par les branches d'appui (16, 16.1) conjointement avec la section de serrage (15, 15.1) reliant celles-ci.

3. Crochet de toit selon la revendication 2, **caractérisé en ce que** chaque branche d'appui (16) de l'un élément d'écartement (13) est formée avec la branche d'appui (16.1) de l'autre élément d'écartement (13.1) se trouvant sur le même côté, dans un plan décalé l'une par rapport à l'autre sur leur section de serrage respective (15, 15.1) par rapport à leur distance avec la plaque de base (3) du pied de montage (2).

4. Crochet de toit selon l'une des revendications 2 et 3, **caractérisé en ce que** les branches d'appui (16, 16.1) des éléments d'écartement (13, 13.1) présentent à leur extrémité un logement de structure d'appui (17, 17.1).

5. Crochet de toit selon l'une des revendications 1 à 4, **caractérisé en ce que** les structures d'appui (6, 6.1) du pied de montage (2) s'étendent dans un plan dans leur étendue en direction de l'étendue longitudinale du pied de montage (2).

6. Crochet de toit selon l'une des revendications 1 à 5, **caractérisé en ce que** les structures d'appui (6, 6.1) opposées l'une à l'autre par rapport à l'espace de montage sont à une distance différente de la plaque de base (3) du pied de montage (2).

7. Crochet de toit selon l'une des revendications 1 à 6, **caractérisé en ce que** les structures d'appui du rail de montage (2) sont réalisées sous la forme de rails d'appui (6, 6.1).

8. Crochet de toit selon la revendication 7, **caractérisé en ce que** l'arête frontale (8, 8.1) tournée vers l'autre structure d'appui (6, 6.1) respective présente des structures d'accrochage, par exemple des creux d'encliquetage, agissant dans l'étendue longitudinale du pied de montage (2).

9. Crochet de toit selon l'une des revendications 1 à 8, **caractérisé en ce que** le pied de montage est un rail de montage (2).

10. Crochet de toit selon l'une quelconque des revendications 1 à 9, **caractérisé en ce qu'un** trou oblong (20) s'étendant en direction du dispositif d'écartement et traversé par le moyen de serrage (14) est ménagé dans la section de raccordement de bras de support (10) de manière à pouvoir régler la distance entre la section de raccordement de bras de support (10) et la plaque de base (3) du pied de montage (2) par rapport au dispositif d'écartement.

11. Crochet de toit selon le préambule de la revendication 1 ou selon l'une quelconque des revendications 1 à 10, **caractérisé en ce que** le bras de support (9) est réalisé en deux parties et sa partie de raccordement de bras de support (10) fait partie d'une première partie de bras de support (21) et son support (11) fait partie d'une seconde partie de bras de support (22), lesquelles deux parties de bras de support (21, 22) sont réglables l'une par rapport à l'autre par rapport à la distance entre le support (11) et la plaque de base (3) du pied de montage (2) à l'extérieur des bardeaux de toit (30) recouvrant le pied de montage (2).

12. Crochet de toit selon la revendication 11, **caractérisé en ce que,** parmi les sections de bras de support coopérant avec le dispositif d'écartement, l'une présente un trou oblong (23) s'étendant dans la direction de modification de l'écartement et l'autre présente un alésage à filet intérieur (24) pour une vis de serrage (25) pour le serrage des deux sections de bras de support (21, 22) l'une avec l'autre.

13. Crochet de toit selon la revendication 11 ou 12, **caractérisé en ce que** les surfaces, tournées l'une vers l'autre, des sections de bras de support prévues pour le dispositif d'écartement portent respectivement des structures d'accrochage complémentaires (26) qui sont mises en prise l'une avec l'autre lorsque des sections de bras de support (21, 22) sont serrées l'une contre l'autre.

14. Crochet de toit selon l'une des revendications 11 à 12, **caractérisé en ce que** les deux parties de bras de support sont guidées l'une vers l'autre dans la direction de leur possibilité de réglage.

15. Crochet de toit selon l'une des revendications 1 à 14, **caractérisé en ce qu'un** adaptateur de rail de montage (12) est raccordé au support (11) du bras de support (9).
